# EUROPEAN PATENT APPLICATION

(11) **EP 4 553 205 A1**
(43) Date of publication of application: **14.05.2025**
(21) Application number: 24206631.4
(22) Date of filing: 15.10.2024
(51) Int. Cl.: D02G 1/02, B65H 7/00, G05B 19/00, G05B 23/00

(54) **FALSE-TWIST TEXTURING MACHINE**

(30) Priority: 10.11.2023 JP 2023192502
(71) Applicant: TMT Machinery, Inc., Osaka-shi, Osaka 541-0041 (JP)
(72) Inventor: Demizu, Yoshimitsu, Kyoto, 612-8686 (JP)
(74) Representative: Hoffmann Eitle

(57) **Abstract**

Suitable yarn threading is realized in a false-twist texturing machine having plural spindles. In a false-twist texturing machine having plural spindles each including a false-twisting device and a first feed roller and a second feed roller provided to oppose each other over the false-twisting device, each spindle is provided with: a first motor 11a and a second motor 16a which are configured to drive the first feed roller and the second feed roller, respectively; inverters 11b and 16b which are able to adjust rotation speeds of the first motor 11a and the second motor 16a, respectively; and an operation unit 24 which is able to generate a signal. Upon receiving a signal generated by the operation unit 24, a control unit 40 controls the inverters 11b and 16b of the spindle where the received signal is generated, and sets the yarn feeding speed of the first feed roller and the second feed roller at a yarn threading speed that is different from a production speed.

## Description

### ACKGROUND OF THE INVENTION

The present invention relates to a false-twist texturing machine configured to false-twist a yarn.

Patent Literature 1 (Japanese Laid-Open Patent Publication No. H1-132843) recites a yarn production device (false-twist texturing machine) having spindles, which is provided with roller groups that are provided on the upstream side and the downstream side of a false-twister group (false-twisting device) in a direction in which a yarn is supplied, respectively. Each roller group is constituted by rollers attached to a line shaft and a top roller which grips a yarn by forming a pair with each roller. The rollers correspond to each spindle, and are simultaneously driven as the line shaft rotates. In such a yarn production device, a supplied yarn is either overfed or drawn between the two roller groups opposing each other over the false-twister group. At the same time, the yarn is twisted by the false-twister group.

### SUMMARY OF THE INVENTION

In the false-twist texturing machine, a suitable yarn feeding speed and a suitable yarn drawing ratio may be different between a state of yarn production and a state of yarn threading. In such a case, the yarn feeding speed and the yarn drawing ratio must be arranged to be different between the state of yarn production and the state of yarn threading. In the above-described false-twist texturing machine, because the rollers corresponding to each spindle are attached to the common line shaft, it is impossible to individually change the yarn feeding speed and the drawing ratio of the yarn of each spindle. It is therefore impossible to change the yarn feeding speed and the yarn drawing ratio of only a spindle where a yarn breakage occurs during yarn production to those suitable for yarn threading. For this reason, the yarn threading cannot be suitably done.

An object of the present invention is to suitably perform yarn threading in a false-twist texturing machine having plural spindles.

According to a first aspect of the invention, a false-twist texturing machine includes: spindles in each of which yarn supplying devices each being configured to supply a yarn and a false-twisting device configured to twist the yarn are provided, wherein, among the yarn supplying devices, two yarn supplying devices that neighbor each other in a yarn running direction and are arranged to oppose each other over the false-twisting device are a first yarn supplying device and a second yarn supplying device, the false-twist texturing machine further comprises: a motor which is provided for at least one of the first yarn supplying device or the second yarn supplying device in each of the spindles and is provided to drive the at least one of the yarn supplying devices; a rotation speed adjuster which is provided to correspond to each motor and is able to adjust rotation speed of the corresponding motor; a signal generator which is provided to correspond to each of the spindles and is able to generate a signal; and a control unit which is able to control the rotation speed adjuster provided in each of the spindles and is configured to individually control yarn feeding speed of the at least one of the yarn supplying devices of each of the spindles, and upon receiving the signal generated by the signal generator, the control unit controls the rotation speed adjuster of a target spindle that is a spindle where the received signal was generated, so as to set the yarn feeding speed of a target yarn supplying device that is the at least one of the yarn supplying devices of the target spindle at a yarn threading speed (i) which is different from a production speed at which the yarn is produced and (ii) which is a speed at which yarn threading is performed.

According to the aspect of the present invention, the yarn feeding speed of at least one of the first yarn supplying device or the second yarn supplying device of the spindle where the signal is generated by the signal generator is set at the yarn threading speed different from the production speed. The yarn feeding speed between the first yarn supplying device and the second yarn supplying device depends on the yarn feeding speed of the yarn supplying device that is on the downstream side in the yarn running direction, among the first yarn supplying device and the second yarn supplying device. On this account, as the yarn feeding speed of the yarn supplying device on the downstream side is set at the yarn threading speed, the yarn feeding speed between the first yarn supplying device and the second yarn supplying device becomes suitable for the yarn threading. Furthermore, as the yarn feeding speed of at least one of the first yarn supplying device or the second yarn supplying device is set at the yarn threading speed, it is possible to differentiate the drawing ratio of the yarn between the first yarn supplying device and the second yarn supplying device from the drawing ratio of the yarn in production. Due to this, the drawing ratio of the yarn is arranged to be suitable for the yarn threading. The yarn threading can therefore be suitably done. In the present invention, at least one of the yarn feeding speed between the first yarn supplying device and the second yarn supplying device or the yarn drawing ratio between the first yarn supplying device and the second yarn supplying device is changeable.

According to a second aspect of the invention, the false-twist texturing machine of the first aspect of the invention is arranged so that the motor is provided for each of the first yarn supplying device and the second yarn supplying device in each of the spindles, and the control unit controls the rotation speed adjuster corresponding to the motor provided for each of the first yarn supplying device and the second yarn supplying device in the target spindle, so as to set both of the yarn feeding speed of the first yarn supplying device and the yarn feeding speed of the second yarn supplying device at the yarn threading speed.

The yarn feeding speed and the drawing ratio of the yarn suitable for the yarn threading vary depending on the type of the yarn and the conditions of yarn processing. According to the aspect of the present invention, both of the yarn feeding speed and the drawing ratio of the yarn between the first yarn supplying device and the second yarn supplying device are arranged to be suitable for the yarn threading. It is therefore possible to further suitably perform the yarn threading by changing the yarn feeding speed and the drawing ratio of the yarn in accordance with the yarn types and the processing conditions.

According to a third aspect of the invention, the false-twist texturing machine of the first or second aspect is arranged so that the signal generator is able to detect yarn breakage and is configured to generate the signal when detecting the yarn breakage.

According to the aspect of the present invention, when yarn breakage occurs in a spindle, the signal generator of that spindle generates a signal so that the yarn feeding speed of at least one of the first yarn supplying device or the second yarn supplying device of that spindle is set at the yarn threading speed different from the production speed. It is therefore possible to suitably perform yarn threading at the spindle where the yarn breakage occurs.

According to a fourth aspect of the invention, the false-twist texturing machine of the second aspect is arranged so that the signal generator is arranged to be operable by an operator, and is an operation unit configured to generate a signal in response to an operation.

According to the aspect of the present invention, when the operation unit of a spindle is operated by the operator, the yarn feeding speed of at least one of the first yarn supplying device or the second yarn supplying device of that spindle is set at the yarn threading speed different from the production speed.

According to a fifth aspect of the invention, the false-twist texturing machine of the fourth aspect is arranged so that two operation units are provided in each of the spindles, and the control unit sets the yarn feeding speed of the first yarn supplying device at the yarn threading speed when one of the two operation units is operated, and sets the yarn feeding speed of the second yarn supplying device at the yarn threading speed when the other of the two operation units is operated.

According to the aspect of the present invention, it is possible to change the yarn feeding speed and the drawing ratio of the yarn between the first yarn supplying device and the second yarn supplying device based on the operator's choice and with a high degree of freedom.

According to a sixth aspect of the invention, the false-twist texturing machine of the fourth aspect is arranged so that one operation unit is provided in each of the spindles, and the control unit sets both the yarn feeding speed of the first yarn supplying device and the yarn feeding speed of the second yarn supplying device at the yarn threading speed when the one operation unit is operated.

The operation can be easily done according to the aspect of the present invention, because the operator is only required to operate the one operation unit of the spindle for which the yarn threading is performed.

According to a seventh aspect of the invention, the false-twist texturing machine of at least one of the first to sixth aspects further includes a determination information acquisition unit that is capable of obtaining information for determining whether yarn threading has been completed in each of the spindles, wherein, for the target spindle, the control unit determines whether the yarn threading has been completed based on a signal from the determination information acquisition unit, and when determining that the yarn threading has been completed, the control unit changes the yarn feeding speed of the yarn supplying device of the target spindle from the yarn threading speed to the production speed.

According to this aspect of the present invention, an operation to return the yarn threading speed to the production speed is unnecessary.

According to an eighth aspect of the invention, the false-twist texturing machine of the seventh aspect is arranged so that the determination information acquisition unit is capable of acquiring information regarding tension of the yarn, and when the tension of the yarn acquired by the determination information acquisition unit is equal to or larger than a predetermined value, the control unit determines that the yarn threading has been completed.

According to this aspect of the present invention, the yarn threading speed can be changed to the production speed when the tension of the yarn becomes equal to or larger than the predetermined value.

According to a ninth aspect of the invention, the false-twist texturing machine of the seventh aspect is arranged so that the determination information acquisition unit is capable of acquiring information regarding tension of the yarn, and when a predetermined time elapses after the tension of the yarn acquired by the determination information acquisition unit becomes equal to or larger than a predetermined value, the control unit determines that the yarn threading has been completed.

According to this aspect of the present invention, the yarn threading speed can be changed to the production speed when the predetermined time elapses after the tension of the yarn becomes equal to or larger than the predetermined value.

According to a tenth aspect of the invention, the false-twist texturing machine of the seventh aspect is arranged so that the determination information acquisition unit is able to detect whether there is a yarn in a yarn path downstream of the first yarn supplying device and the second yarn supplying device in the yarn running direction, and when a predetermined time elapses after the determination information acquisition unit detects that there is the yarn in the yarn path, the control unit determines that the yarn threading has been completed.

According to this aspect of the present invention, the yarn threading speed can be changed to the production speed when the predetermined time elapses after the yarn is detected in the yarn path downstream of the first yarn supplying device and the second yarn supplying device in the yarn running direction.

According to an eleventh aspect of the invention, the false-twist texturing machine of the seventh aspect is arranged so that the determination information acquisition unit is the signal generator, and when a predetermined time elapses after the signal generator generates the signal, the control unit determines that the yarn threading has been completed.

According to this aspect of the present invention, the yarn threading speed can be changed to the production speed when the predetermined time elapses after the signal generator generates the signal.

According to a twelfth aspect of the invention, the false-twist texturing machine of the seventh aspect further includes a winding device which is provided in each of the spindles and is configured to wind the yarn which has been twisted by the false-twisting device, wherein, the winding device includes a start instruction input unit which is arranged to be operable by the operator and by which an instruction to start winding of the yarn is able to be input, the determination information acquisition unit is the start instruction input unit, and the control unit determines that the yarn threading has been completed when the start instruction input unit is operated.

According to this aspect of the present invention, the yarn threading speed can be changed to the production speed when the winding device is instructed to start the winding of the yarn.

According to a thirteenth aspect of the invention, the false-twist texturing machine of the seventh aspect further includes a winding device which is provided in each of the spindles and is configured to wind the yarn which has been twisted by the false-twisting device, wherein, the winding device includes: a sucking unit which is able to suck the yarn; and a sucking detection unit which is able to detect that the yarn is being sucked by the sucking unit, the determination information acquisition unit is the sucking detection unit, and when the sucking detection unit detects that the yarn is being sucked by the sucking unit, the control unit determines that the yarn threading has been completed.

According to this aspect of the present invention, the yarn threading speed can be changed to the production speed when the yarn is sucked by the sucking unit of the winding device.

According to a fourteenth aspect of the invention, the false-twist texturing machine of at least one of the first to thirteenth aspects is arranged so that the yarn threading speed is lower than the production speed.

According to this aspect of the present invention, the yarn threading can be easily done because, in the yarn threading, the rotation speed of the roller is decreased as compared to the production.

According to a fifteenth aspect of the invention, the false-twist texturing machine of at least one of the first to fourteenth aspects is arranged so that the yarn supplying device is a roller.

According to the aspect of the present invention, the yarn feeding speed of the roller is set at the yarn threading speed different from the production speed.

### BRIEF DESCRIPTION OF THE DRAWINGS

FIG. 1 is a profile of a false-twist texturing machine of an embodiment of the present invention.
FIG. 2 is a schematic diagram of the false-twist texturing machine, expanded along paths of yarns.
FIG. 3 is a block diagram of the electrical structure of an important part the false-twist texturing machine.
FIG. 4 is a flowchart of an example of a process performed by a control unit.
FIG. 5 is a flowchart of a yarn breakage dealing process shown in FIG. 4.
FIG. 6 is a block diagram showing an electric configuration of an important part of a false-twist texturing machine of a modification.

### DESCRIPTION OF THE PREFERRED EMBODIMENTS

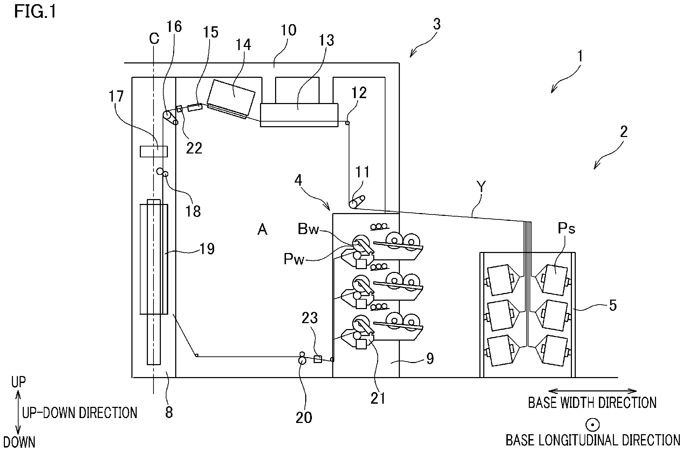

The following will describe a false-twist texturing machine 1 of a preferred embodiment of the present invention, with reference to drawings. A vertical direction to the sheet of FIG. 1 is defined as a base longitudinal direction, and a left-right direction to the sheet is defined as a base width direction. A direction orthogonal to the base longitudinal direction and the base width direction is defined as an up-down direction in which the gravity acts. In this regard, the base longitudinal direction and the base width direction are substantially in parallel to the horizontal direction.

### (Overall Structure of False-Twist Texturing Machine 1)

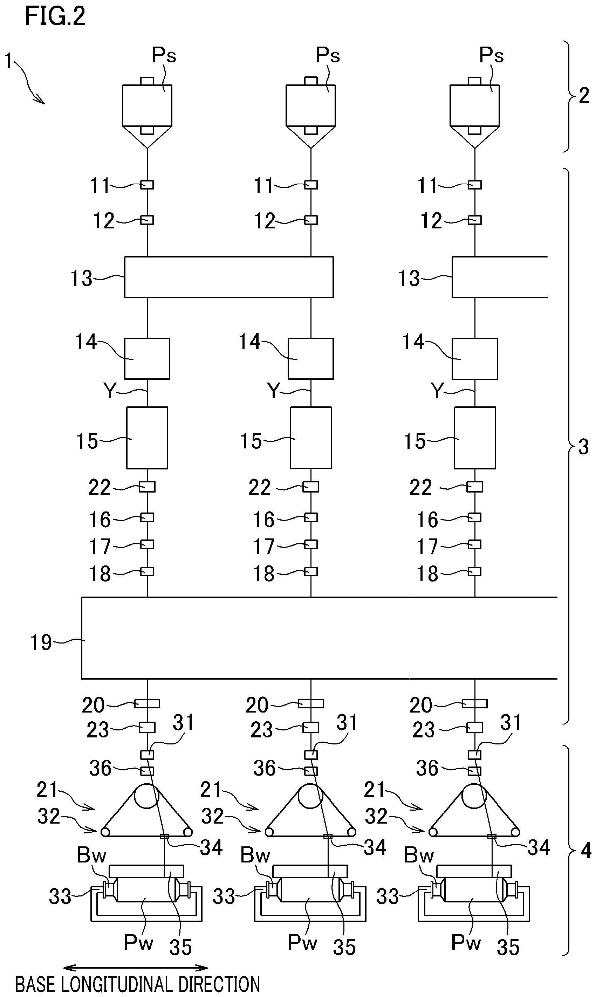

The false-twist texturing machine 1 is able to perform false twisting of yarns Y made of synthetic fibers such as nylon (polyamide fibers) and polyester. As shown in FIG. 1 and FIG. 2, the false-twist texturing machine 1 includes a yarn supplying unit 2 configured to supply a yarn Y, a processing unit 3 configured to false-twist the yarn Y supplied from the yarn supplying unit 2, and a winding unit 4 configured to wind the yarn Y processed by the processing unit 3 onto a winding bobbin Bw. As shown in FIG. 2, constituent features of the yarn supplying unit 2, the processing unit 3, and the winding unit 4 are aligned to form plural lines in the base longitudinal direction. The base longitudinal direction is a direction orthogonal to a running plane (plane of FIG. 1) of the yarns Y. The running plane of the yarns Y is formed of the yarn paths extending from the yarn supplying unit 2 to the winding unit 4 via the processing unit 3.

The yarn supplying part 2 includes a creel stand 5 retaining yarn supply packages Ps. The yarn supplying unit 2 is configured to supply the yarns Y to the processing unit 3. The processing unit 3 is configured to false-twist the yarns Y supplied from the yarn supply packages Ps. In the processing unit 3, mainly the following members are provided in this order from the upstream side in a yarn running direction: a first feed roller 11; a twist-stopping guide 12; a first heater 13; a cooler 14; a false-twisting device 15; a second feed roller 16; an interlacing device 17; a third feed roller 18; a second heater 19; and a fourth feed roller 20. The winding unit 4 includes plural winding devices 21. Each winding device 21 is configured to wind a yarn Y false-twisted by the processing unit 3 onto a winding bobbin Bw, so as to form a wound package Pw.

The false-twist texturing machine 1 includes a main base 8 and a winding base 9 which are spaced apart from each other in the base width direction. The main base 8 and the winding base 9 extend to be substantially identical in length in the base longitudinal direction. The main base 8 and the winding base 9 oppose each other in the base width direction. An upper part of the main base 8 is connected to an upper part of the winding base 9 by a supporting frame 10. Each device forming the processing unit 3 is mainly attached to the main base 8 or the supporting frame 10. Each device forming the winding unit 4 is mainly attached to the winding base 9. The main base 8, the winding base 9, and the supporting frame 10 form a working space A in which an operator performs an operation such as yarn threading to each device. The yarn paths are formed so that the yarns Y mainly run around the working space A.

The false-twist texturing machine 1 further includes units termed spans each of which includes a pair of the main base 8 and the winding base 9 provided to oppose each other. In one span, processing units (which are termed spindles) in which yarn paths are formed to pass the devices constituting the processing unit 3 are lined up in the base longitudinal direction. With this arrangement, in one span, yarns Y running while being lined up in the base longitudinal direction can be simultaneously false-twisted. As shown in FIG. 1, in the false-twist texturing machine 1, the spans are placed in a left-right symmetrical manner to the sheet, with a center line C in the base width direction of the main base 8 being set as a symmetry axis. The main base 8 is shared between the left span and the right span. The spans are aligned in the base longitudinal direction.

### (Processing Unit)

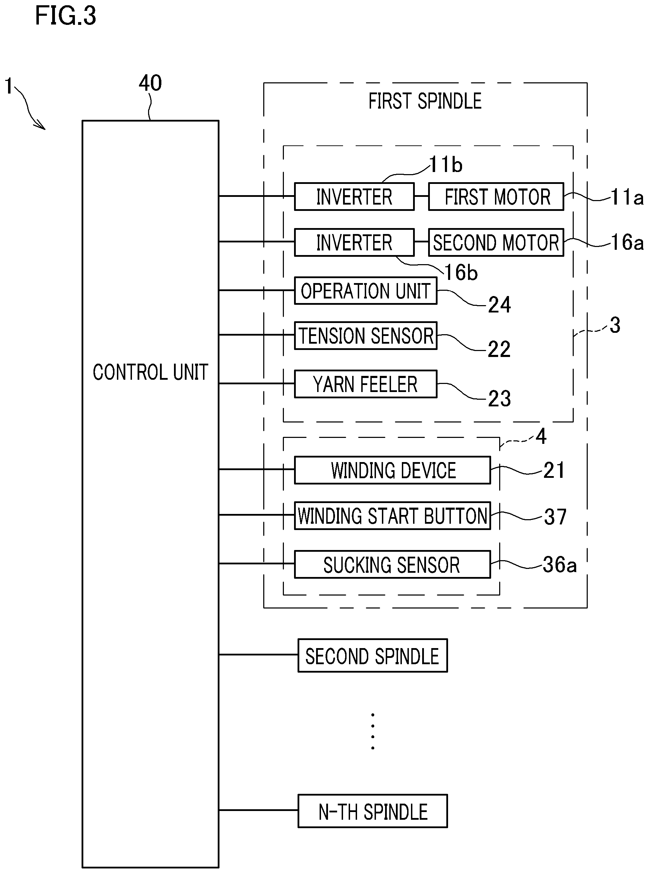

The following will describe the structure of the processing unit 3 with reference to FIG. 1 and FIG. 2. The first feed roller 11 is configured to unwind a yarn Y from a yarn supply package Ps attached to the yarn supplying unit 2, and to feed the yarn Y to the first heater 13. As shown in FIG. 2, the first feed roller 11 is configured to feed one yarn Y to the first heater 13. One first feed roller 11 is provided for each spindle. The first feed roller 11 is a godet roller. The first feed roller 11 is rotationally driven by a first motor 11a (see FIG. 3) so as to feed the yarn Y wound on the circumferential surface. One first motor 11a is provided for each spindle.

In the present embodiment, the twist-stopping guide 12 is provided for each yarn Y. The twist-stopping guide 12 is provided for each pair of two yarns Y. The twist-stopping guide 12 is provided to prevent twist of the yarn Y from being propagated to the upstream side of the twist-stopping guide 12 in the yarn running direction. The twist of the yarn Y is formed by the false-twisting device 15.

The first heater 13 is configured to heat the yarn Y sent from the first feed roller 11 to a predetermined processing temperature. As shown in FIG. 2, each first heater 13 is able to heat, e.g., two yarns Y.

The cooler 14 is configured to cool the yarn Y heated by the first heater 13. As shown in FIG. 2, for example, the cooler 14 is configured to cool one yarn Y. The cooler 14 may be able to simultaneously cool plural yarns Y.

The false-twisting device 15 is provided downstream of the cooler 14 in the yarn running direction. The false-twisting device 15 is configured to twist the yarn Y. For example, the false-twisting device 15 is a so-called disc-friction false-twisting device. However, the disclosure is not limited to this. In the present embodiment, the false-twisting device 15 is configured to twist one yarn Y. The false-twisting device 15 may be configured to simultaneously twist two yarns Y.

The second feed roller 16 is configured to feed the yarn Y processed by the false-twisting device 15 to the interlacing device 17. As shown in FIG. 2, the second feed roller 16 is configured to feed one yarn Y to the interlacing device 17. One second feed roller 16 is provided for each spindle. The second feed roller 16 is a godet roller. The second feed roller 16 is rotationally driven by a second motor 16a (see FIG. 3) so as to feed the yarn Y wound on the circumferential surface. One second motor 16a is provided for each spindle.

In the present embodiment, the yarn feeding speed of the second feed roller 16 is higher than the yarn feeding speed of the first feed roller 11. The yarn Y is therefore drawn and false-twisted between the first feed roller 11 and the second feed roller 16. In each spindle, one tension sensor 22 is provided between the false-twisting device 15 and the second feed roller 16. The tension sensor 22 is able to obtain the magnitude of the tension of the yarn Y between the first feed roller 11 and the second feed roller 16.

The interlacing device 17 is configured to interlace the yarn Y. The interlacing device 17 has, e.g., a known interlace nozzle configured to interlace the yarn Y by means of an airflow.

The third feed roller 18 is configured to feed, to the second heater 19, the yarn Y running downstream of the interlacing device 17 in the yarn running direction. As shown in FIG. 2, for example, the third feed roller 18 is configured to feed one yarn Y to the second heater 19. Alternatively, the third feed roller 18 may be able to feed plural yarns Y to the downstream side in the yarn running direction. The yarn feeding speed of the third feed roller 18 is lower than the yarn feeding speed of the second feed roller 16. The yarn Y is therefore relaxed between the second feed roller 16 and the third feed roller 18.

The second heater 19 is configured to heat the yarn Y sent from the third feed roller 18. The second heater 19 extends along the vertical direction, and one second heater 19 is provided in one span.

The fourth feed roller 20 is configured to feed the yarn Y heated by the second heater 19 to the winding device 21. As shown in FIG. 2, for example, the fourth feed roller 20 is able to feed one yarn Y to the winding device 21. Alternatively, the fourth feed roller 20 may be able to feed plural adjacent yarns Y to the downstream side in the yarn running direction. The yarn feeding speed of the fourth feed roller 20 is lower than the yarn feeding speed of the third feed roller 18. The yarn Y is therefore relaxed between the third feed roller 18 and the fourth feed roller 20.

In each spindle, one yarn feeler 23 is provided between the fourth feed roller 20 and the winding device 21. The yarn feeler 23 is able to detect whether a yarn Y exists in the yarn path between the fourth feed roller 20 and the winding device 21. To put it differently, the yarn feeler 23 is able to detect the occurrence of yarn breakage. The yarn feeler 23 generates a signal upon detection of yarn breakage.

In the processing unit 3 arranged as described above, the yarn Y drawn between the first feed roller 11 and the second feed roller 16 is twisted by the false-twisting device 15. The twist formed by the false-twisting device 15 propagates to the twist-stopping guide 12, but does not propagate to the upstream side of the twist-stopping guide 12 in the yarn running direction. The yarn Y which is twisted and drawn is heated at the first heater 13 and thermally set. After that, the yarn Y is cooled at the cooler 14. The yarn Y is untwisted on the downstream side of the false-twisting device 15 in the yarn running direction. However, the yarn Y is maintained to be wavy in shape on account of the thermal setting described above (i.e., the crimp contraction of the yarn Y is maintained).

The false-twisted yarn Y is interlaced by the interlacing device 17 while being relaxed between the second feed roller 16 and the third feed roller 18. Thereafter, the yarn Y is guided toward the downstream side in the yarn running direction. Furthermore, the yarn Y is thermally processed by the second heater 19 while being relaxed between the third feed roller 18 and the fourth feed roller 20. Finally, the yarn Y sent from the fourth feed roller 20 is wound by the winding device 21.

### (Structure of Winding Unit)

The following will describe the structure of the winding unit 4 with reference to FIG. 2. The winding unit 4 includes a winding device 21 provided for each spindle. Each winding device 21 is configured to be able to wind a yarn Y which has been twisted by the false-twisting device 15 onto one winding bobbin Bw. Each winding device 21 mainly includes a fulcrum guide 31, a traverse device 32, and a cradle 33. Each winding device 21 is provided with a known yarn threading unit (not illustrated) used for threading a yarn Y to the winding bobbin Bw. The yarn threading unit is recited in, for example, Japanese Laid-Open Patent Publication No. 2023-131463.

The fulcrum guide 31 is a guide functioning as a fulcrum when the yarn Y is traversed. The traverse device 32 is able to traverse the yarn Y by means of a traverse guide 34. The cradle 33 is configured to rotatably support the winding bobbin Bw. A contact roller 35 is provided in the vicinity of the cradle 33. The contact roller 35 is configured to make contact with a surface of one wound package Pw so as to apply a contact pressure to the surface of the wound package Pw.

In each spindle, one sucking unit 36 capable of sucking the yarn Y is provided on the downstream side of the fulcrum guide 31 in the yarn running direction. The sucking unit 36 is arranged to be able to suck and retain the yarn Y. For each sucking unit 36, a sucking sensor 36a (see FIG. 3) is provided to be able to detect that the yarn Y is being sucked. A yarn threading unit (not illustrated) threads, to the winding bobbin Bw, the yarn Y having been sucked into the sucking unit 36.

The winding unit 4 arranged as described above makes it possible to wind the yarn Y sent from the fourth feed roller 20 onto the winding bobbin Bw by means of the winding device 21, so as to form the wound package Pw.

### (Electrical Structure)

The following will describe the electrical structure of an important part of the false-twist texturing machine 1 with reference to FIG. 3. As shown in FIG. 3, the false-twist texturing machine 1 includes a control unit 40 which controls operations of devices of spindles (a first spindle to an n-th spindle). The control unit 40 is electrically connected to the first motor 11a, the second motor 16a, the tension sensor 22, the yarn feeler 23, the winding device 21, and the sucking sensor 36a which are described above. The first motor 11a is connected to the control unit 40 through an inverter 11b. The inverter 11b is able to adjust the rotation speed of the first motor 11a. The second motor 16a is connected to the control unit 40 through an inverter 16b. The inverter 16b is able to adjust the rotation speed of the second motor 16a. The control unit 40 is able to control the inverters 11b and 16b of each spindle, and individually controls the yarn feeding speed of the first feed roller 11 and the second feed roller 16 for each spindle.

Based on an output signal of the yarn feeler 23, the control unit 40 is able to determine whether yarn breakage has occurred. The determination of the yarn breakage may not be performed according to this method. For example, the control unit 40 may determine whether yarn breakage has occurred based on the magnitude of the tension obtained by the tension sensor 22. When it is determined that yarn breakage has occurred, the control unit 40 controls the inverters 11b and 16b and the winding device 21 of the spindle where the yarn breakage has occurred, so as to stop the first feed roller 11, the second feed roller 16, and the winding device 21.

The control unit 40 is electrically connected to an operation unit 24. One operation unit 24 is provided for each spindle. The operation unit 24 is arranged to be operable by an operator. When the operation unit 24 is operated, a signal is sent to the control unit 40. In the present embodiment, the operation unit 24 is, for example, a button or a lever provided on, for example, the main base 8. The operation unit 24 may be, for example, a button displayed on a display of a terminal device such as a tablet terminal, which is able to communicate with the control unit 40.

When the operation unit 24 is operated, the control unit 40 controls the inverters 11b and 16b of the spindle corresponding to the operated operation unit 24. The control unit 40 sets both the yarn feeding speed of the first feed roller 11 and the yarn feeding speed of the second feed roller 16 at a yarn threading speed (i) which is lower than a production speed at which the yarn Y is produced and (ii) which is a speed at which the yarn threading is performed.

To be more specific, for example, when a yarn Y to be produced is relatively weak, the yarn feeding speed of the first feed roller 11 and the second feed roller 16 is set at the yarn threading speed so that the drawing ratio of the yarn Y between the first feed roller 11 and the second feed roller 16 is low as compared to the drawing ratio in yarn production. This makes it possible to avoid the breakage of the yarn Y at the time of yarn threading, due to friction resistance or drawing.

On the other hand, for example, when a yarn Y is produced at a high speed, the yarn feeding speed of the first feed roller 11 and the second feed roller 16 is set at the yarn threading speed so that the drawing ratio of the yarn Y between the first feed roller 11 and the second feed roller 16 is high as compared to the drawing ratio in yarn production. It is noted that, when a yarn Y is produced at a high speed, the production speed of the second feed roller 16 is at least about 1000m/min.

The control unit 40 is electrically connected to a winding start button 37. The winding start button 37 is provided for each winding device 21. One winding start button 37 is therefore provided for each spindle. The winding start button 37 is arranged to be operable by an operator. The winding start button 37 is used for inputting an instruction to cause the winding device 21 to start the winding of the yarn Y. When the winding start button 37 is operated, a signal is sent to the control unit 40.

When the winding start button 37 is operated, the control unit 40 determines that yarn threading to the spindle where the winding start button 37 is operated is completed. The control unit 40 then changes the yarn feeding speed of the first feed roller 11 and the yarn feeding speed of the second feed roller 16 of the spindle where the winding start button 37 is operated, from the yarn threading speed to the production speed. Furthermore, the control unit 40 controls the winding device 21 of the spindle where the winding start button 37 is operated, so as to start the winding of the yarn Y.

### (Control Process)

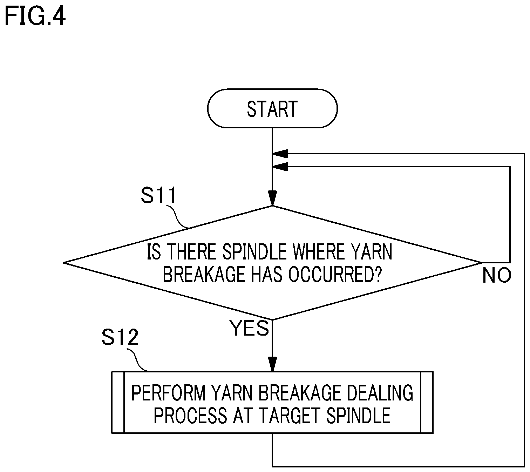

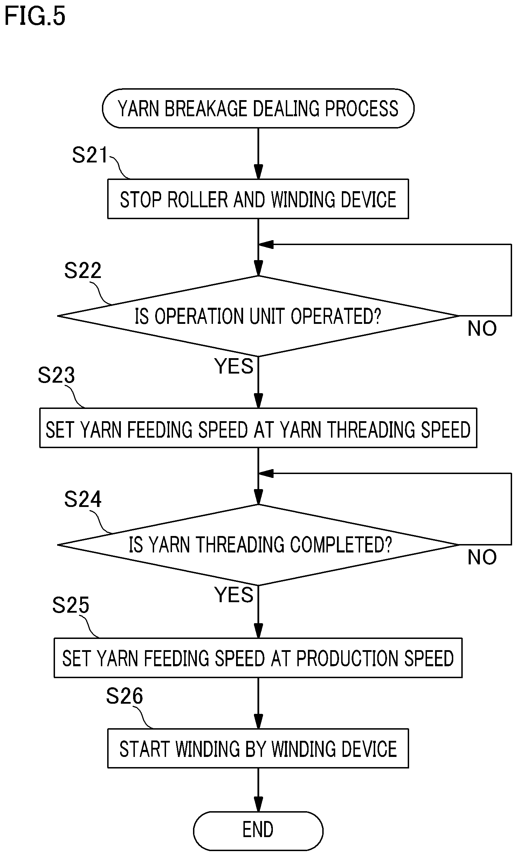

The following will describe an example of a control process performed by the control unit 40, with reference to the flowcharts in FIG. 4 and FIG. 5.

The process shown in FIG. 4 is repeated while the production of the yarn Y is performed in the false-twist texturing machine 1. To begin with, as shown in FIG. 4, based on an output signal of the yarn feeler 23, the control unit 40 determines whether there is a spindle in which yarn breakage has occurred, among the spindles of the false-twist texturing machine 1 (S11). The control unit 40 repeats the determination of S11 until a spindle where yarn breakage has occurred is found. When there is a spindle where yarn breakage has occurred (YES in S11), the control unit 40 executes a yarn breakage dealing process (see FIG. 5) at the target spindle (spindle where yarn breakage has occurred) (S12) .

As shown in FIG. 5, in the yarn breakage dealing process, to begin with, the control unit 40 stops the first feed roller 11, the second feed roller 16, and the winding device 21 (S21) . Subsequently, the control unit 40 determines whether the operation unit 24 has been operated (S22). The control unit 40 repeats the determination of S22 until the unit determines that the operation unit 24 has been operated. When the operation unit 24 has been operated (YES in S22), the control unit 40 changes the yarn feeding speed of the first feed roller 11 and the second feed roller 16 to the yarn threading speed (S23). At this stage, the first feed roller 11 and the second feed roller 16 in a stopped state start to rotate, and continue the rotation at a speed at which the yarn Y is fed at the yarn threading speed.

Thereafter, based on a signal that is sent when the winding start button 37 is operated, the control unit 40 determines whether the yarn threading has been completed (S24). The control unit 40 repeats the determination of S24 until the unit determines that the yarn threading has been completed. When the yarn threading has been completed (YES in S24), the control unit 40 changes the yarn feeding speed of the first feed roller 11 and the second feed roller 16 from the yarn threading speed to the production speed (S25) . Lastly, the control unit 40 starts to cause the winding device 21 to wind the yarn Y (S26), and the yarn breakage dealing process is finished.

### (Yarn Threading Process)

The following describes a process of yarn threading to the false-twist texturing machine 1 by an operator. When yarn breakage occurs during yarn production and a yarn Y must be threaded again, the operator operates the operation unit 24 (see FIG. 3) of the spindle where the yarn breakage occurs. AS a result, the yarn feeding speed of the first feed roller 11 and the second feed roller 16 of the spindle where the yarn threading is to be performed is changed to the yarn threading speed.

The operator threads the yarn Y to the second feed roller 16, and then threads the yarn Y to the first feed roller 11. Subsequently, the operator threads the yarn Y to the false-twisting device 15. With this, the tension sensor 22 becomes able to detect the tension of the yarn Y between the first feed roller 11 and the second feed roller 16. Furthermore, the operator threads the yarn Y to the twist-stopping guide 12. As a result, the yarn Y is set in the first heater 13 and the cooler 14.

Subsequently, the operator performs yarn placement onto the third feed roller 18, yarn setting in the second heater 19, and yarn placement onto the fourth feed roller 20 in this order. Furthermore, the operator causes the sucking unit 36 of the winding unit 4 to suck the yarn Y. With this, the yarn feeler 23 becomes able to detect that the yarn Y exists in the yarn path between the fourth feed roller 20 and the winding device 21. Lastly, the operator operates the winding start button 37 (see FIG. 3). Due to this, the winding of the yarn Y by the winding device 21 starts after the yarn Y is threaded to the winding bobbin Bw of the winding device 21 by the yarn threading unit (not illustrated).

### (Characteristics of Embodiment)

As described above, the false-twist texturing machine 1 of the present embodiment includes spindles each of which includes the rollers (the first feed roller 11, the second feed roller 16, the third feed roller 18, and the fourth feed roller 20) for feeding the yarn Y and the false-twisting device 15 configured to twist the yarn Y. The first feed roller 11 and the second feed roller 16 are two rollers adjacent to each other in the yarn running direction among the rollers, and are provided to oppose each other over the false-twisting device 15. The false-twist texturing machine 1 includes: the first motor 11a which is provided at the first feed roller 11 in each spindle to drive the first feed roller 11; the second motor 16a which is provided at the second feed roller 16 in each spindle to drive the second feed roller 16; the inverter 11b which is provided to correspond to the first motor 11a to be able to adjust the rotation speed of the first motor 11a; the inverter 16b which is provided to correspond to the second motor 16a to be able to adjust the rotation speed of the second motor 16a; the operation unit 24 which is provided to correspond to each spindle and is able to generate a signal; and the control unit 40 which is able to control the inverters 11b and 16b provided for each spindle and individually controls the yarn feeding speed of the first feed roller 11 and the second feed roller 16 for each spindle. Upon receiving a signal generated by the operation unit 24, the control unit 40 controls the inverters 11b and 16b of the target spindle where the received signal was generated, so as to set the yarn feeding speed of the first feed roller 11 of the target spindle and the yarn feeding speed of the second feed roller 16 of the target spindle at the yarn threading speed (i) which is different from the production speed at which the yarn Y is produced and (ii) which is a speed at which the yarn threading is performed.

According to the arrangement above, the yarn feeding speed of the first feed roller 11 and the yarn feeding speed of the second feed roller 16 of the spindle where the signal is generated by the operation unit 24 are set at a yarn threading speed that is different from the production speed. The yarn feeding speed between the first feed roller 11 and the second feed roller 16 depends on the yarn feeding speed of the second feed roller 16 that is on the downstream side in the yarn running direction, among the first feed roller 11 and the second feed roller 16. On this account, as the yarn feeding speed of the second feed roller 16 is set at the yarn threading speed, the yarn feeding speed between the first feed roller 11 and the second feed roller 16 becomes suitable for the yarn threading. Furthermore, because at least one of the yarn feeding speed of the first feed roller 11 or the yarn feeding speed of the second feed roller 16 is set at the yarn threading speed, it is possible to differentiate the drawing ratio of the yarn Y drawn between the first feed roller 11 and the second feed roller 16 from the drawing ratio at the time of the production. Due to this, the drawing ratio of the yarn Y is arranged to be suitable for the yarn threading. The yarn threading can therefore be suitably done.

In the false-twist texturing machine 1 of the present embodiment, the control unit 40 controls the inverters 11b and 16b corresponding to the first motor 11a and the second motor 16a that are provided at the first feed roller 11 and the second feed roller 16, respectively, in the target spindle, so as to set both of the yarn feeding speed of the first feed roller 11 and the yarn feeding speed of the second feed roller 16 at the yarn threading speed. The yarn feeding speed and the drawing ratio of the yarn Y suitable for the yarn threading vary depending on the type of the yarn Y and the conditions of yarn processing. According to the arrangement above, both of the yarn feeding speed and the drawing ratio of the yarn Y between the first feed roller 11 and the second feed roller 16 are arranged to be suitable for the yarn threading. It is therefore possible to further suitably perform the yarn threading by changing the yarn feeding speed and the drawing ratio of the yarn Y in accordance with the yarn types and the processing conditions.

In the false-twist texturing machine 1 of the present embodiment, the operation unit 24 is arranged to be operable by the operator, and generates a signal in response to the operation. According to this arrangement above, when the operation unit 24 of a spindle is operated by the operator, the yarn feeding speed of the first feed roller 11 and the second feed roller 16 of that spindle is set at the yarn threading speed that is different from the production speed.

In addition to the above, in the false-twist texturing machine 1 of the present embodiment, one operation unit 24 is provided for each spindle. The control unit 40 sets both of the yarn feeding speed of the first feed roller 11 and the yarn feeding speed of the second feed roller 16 at the time of the operation of the one operation unit 24 at the yarn threading speed. The operation can be easily done in this arrangement, because the operator is only required to operate the one operation unit 24 of the spindle for which the yarn threading is performed.

In addition to the above, the false-twist texturing machine 1 of the present embodiment is provided with the winding start button 37 that is capable of obtaining information for determining whether the yarn threading has been completed in each spindle. For the spindle in which the yarn feeding speed of the first feed roller 11 and the yarn feeding speed of the second feed roller 16 are set at the yarn threading speed, the control unit 40 determines whether the yarn threading has been completed, based on a signal from the winding start button 37. If it is determined that the yarn threading has been completed, the control unit 40 changes the yarn feeding speed of the first feed roller 11 and the yarn feeding speed of the second feed roller 16 of that spindle from the yarn threading speed to the production speed. With this arrangement, an operation to return the yarn threading speed to the production speed is unnecessary.

The false-twist texturing machine 1 of the present embodiment includes the winding device 21 that is provided in each spindle and is configured to wind the yarn Y having been twisted by the false-twisting device 15. The winding device 21 includes the winding start button 37 which is arranged to be operable by the operator and by which an instruction to start the winding of the yarn Y can be input. The false-twist texturing machine 1 determines that the yarn threading is completed, when the winding start button 37 is operated. In this arrangement, the yarn threading speed can be changed to the production speed when the winding device 21 is instructed to start the winding of the yarn Y.

In addition to the above, in the false-twist texturing machine 1 of the present embodiment, the yarn threading speed is lower than the production speed. The yarn threading can be easily done with this arrangement, because, in the yarn threading, the rotation speed of each of the first feed roller 11 and the second feed roller 16 is decreased as compared to the production.

The embodiment of the present invention is described hereinabove. However, the specific structure of the present invention shall not be interpreted as to be limited to the above described embodiment. The scope of the present invention is defined not by the above embodiment but by claims set forth below, and shall encompass the equivalents in the meaning of the claims and every modification within the scope of the claims.

In the embodiment above, the control unit 40 sets the yarn feeding speed of the first feed roller 11 and the second feed roller 16 at the yarn threading speed, when receiving a signal generated by the operation unit 24. In other words, the operation unit 24 functions as a signal generator of the present invention. Alternatively, for example, when receiving a signal generated by the yarn feeler 23 capable of detecting yarn breakage, the control unit 40 may set the yarn feeding speed of the first feed roller 11 and the second feed roller 16 at the yarn threading speed. In this case, the yarn feeler 23 functions as the signal generator of the present invention.

In the embodiment above, when determining that yarn breakage has occurred, the control unit 40 stops the first feed roller 11 and the second feed roller 16 of the spindle where the yarn breakage has occurred. The disclosure, however, is not limited to this arrangement. When determining that yarn breakage has occurred, the control unit 40 may maintain the yarn feeding speed of the first feed roller 11 and the second feed roller 16 at the production speed, without stopping these rollers. In this case, when the operation unit 24 is operated, the control unit 40 changes the yarn feeding speed of the first feed roller 11 and the yarn feeding speed of the second feed roller 16 of the spindle where the operation unit 24 is operated, from the production speed to the yarn threading speed.

While in the embodiment above the yarn threading speed is lower than the production speed, the disclosure is not limited to this arrangement. The yarn threading speed may be any speed as long as it is different from the production speed. In other words, the yarn threading speed may be higher than the production speed. The yarn threading speed may be zero. To put it differently, the yarn threading may be done in a state in which the first feed roller 11 and the second feed roller 16 are stopped.

In the embodiment above, the first feed roller 11 and the second feed roller 16 are godet rollers each of which is configured to feed the yarn Y wound on the circumferential surface as it is rotationally driven by a motor. The disclosure, however, is not limited to this arrangement. The first feed roller 11 and the second feed roller 16 may be nip rollers that are composed of a drive roller driven by a motor provided in each spindle and a driven roller that is rotated in accordance with the rotation of the drive roller.

While in the embodiment above the first motor 11a is provided for the first feed roller 11 in each spindle and the second motor 16a is provided for the second feed roller 16 in each spindle, the disclosure is not limited to this arrangement. The minimum requirement is that at least one of the first motor 11a or the second motor 16a is provided in each spindle.

In the embodiment above, when the operation unit 24 is operated, the yarn feeding speed of the first feed roller 11 and the yarn feeding speed of the second feed roller 16 are both changed to the yarn threading speed. The disclosure, however, is not limited to this arrangement. When the operation unit 24 is operated, at least one of the yarn feeding speed of the first feed roller 11 or the yarn feeding speed of the second feed roller 16 may be set at the yarn threading speed.

While in the embodiment above the yarn Y is drawn and false-twisted between the first feed roller 11 and the second feed roller 16, the disclosure is not limited to this arrangement. The yarn Y may be false-twisted while being overfed, between the first feed roller 11 and the second feed roller 16. In this case, in the yarn threading, yarn breakage may occur due to timings of contraction by false-twist and overfeeding. For this reason, in the yarn threading, the yarn Y is preferably drawn a little between the first feed roller 11 and the second feed roller 16. On this account, when, for example, the operation unit 24 is operated, only the first motor 11a is controlled to arrange the yarn feeding speed of the first feed roller 11 to be the yarn threading speed that is lower than the production speed.

In the embodiment above, when the operation unit 24 is operated, the drawing ratio of the yarn Y between the first feed roller 11 and the second feed roller 16 is arranged to be different from the drawing ratio in the production. The disclosure, however, is not limited to this arrangement. When the operation unit 24 is operated, the drawing ratio of the yarn Y between the first feed roller 11 and the second feed roller 16 may be identical with the drawing ratio in the production.

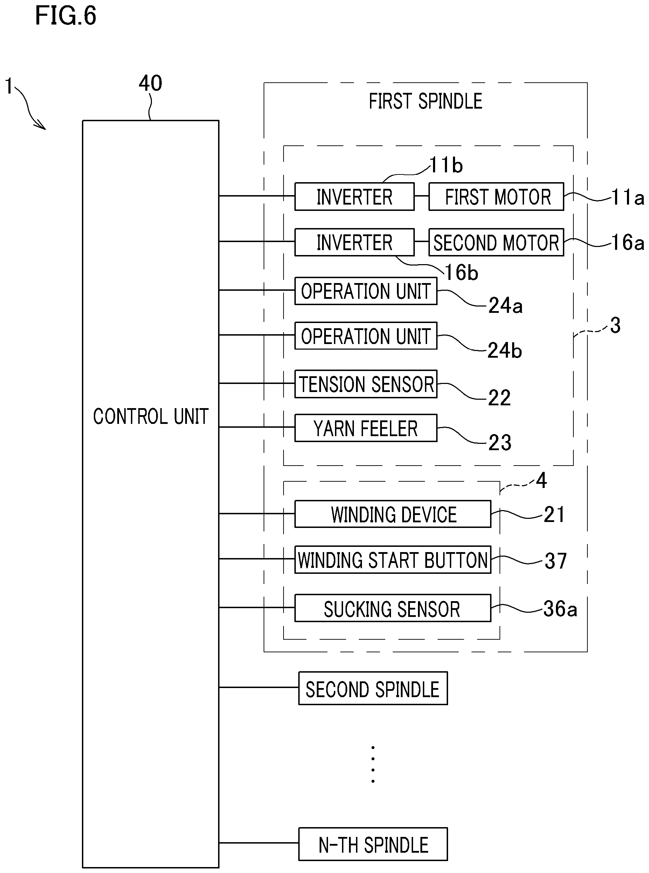

In the embodiment above, one operation unit 24 is provided in each spindle. However, the disclosure is not limited to this. That is to say, as shown in FIG. 6, two operation units 24a and 24b may be provided in each spindle. In this case, the yarn feeding speed of the first feed roller 11 may be set at the yarn threading speed when the operation unit 24a is operated, whereas the yarn feeding speed of the second feed roller 16 may be set at the yarn threading speed when the operation unit 24b is operated. This arrangement allows the operator to differentiate the timing at which the yarn feeding speed of the first feed roller 11 is set at the yarn threading speed from the timing at which the yarn feeding speed of the second feed roller 16 is set at the yarn threading speed. When, for example, each operation unit 24 changes the yarn feeding speed of the roller from the production speed to the yarn threading speed, the operator is allowed to choose one of the following options at will: to operate both two operating units 24a and 24b; to operate only one of them; to operate none of them. It is therefore possible to change the yarn feeding speed and the drawing ratio of the yarn Y between the first feed roller 11 and the second feed roller 16 based on the operator's choice and with a high degree of freedom.

While in the embodiment above the operating unit 24 is used for setting the yarn feeding speed of the roller at the yarn threading speed, the disclosure is not limited to this arrangement. For example, the operation unit 24 may switch the yarn feeding speed of the roller of the spindle where the operation unit 24 is operated between the production speed and the yarn threading speed, each time the operation unit 24 is operated. Alternatively, for example, the operation unit 24 may change the yarn feeding speed of the roller of the spindle where the operation unit 24 is operated, in the order of zero, the production speed, the yarn threading speed, and zero, each time the operation unit 24 is operated.

In the embodiment above, whether the yarn threading has been completed in each spindle is determined based on a signal from the winding start button 37. Therefore the winding start button 37 is equivalent to a determination information acquisition unit of the present invention. However, the method of determining whether the yarn threading has been completed is not limited to this. There are alternative methods for determining whether the yarn threading has been completed, as described below.
- It is determined that the yarn threading has been completed when a predetermined time elapses from an operation of the operation unit 24. (The operation unit 24 functions as the determination information acquisition unit.)
- It is determined that the yarn threading has been completed when a predetermined time elapses from generation of a signal at the yarn feeler 23 (the yarn feeler 23 functions as the determination information acquisition unit.)
- It is determined that the yarn threading has been completed when the tension of the yarn Y obtained by the tension sensor 22 is equal to or larger than a predetermined value. (The tension sensor 22 functions as the determination information acquisition unit.)
- It is determined that the yarn threading has been completed when a predetermined time elapses after the tension of the yarn Y obtained by the tension sensor 22 becomes equal to or larger than a predetermined value. (The tension sensor 22 functions as the determination information acquisition unit.)
- It is determined that the yarn threading has been completed when a predetermined time elapses after the detection of the yarn Y in the yarn path downstream of the second feed roller 16 in the yarn running direction by the yarn feeler 23. (The yarn feeler 23 functions as the determination information acquisition unit.)
- It is determined that the yarn threading has been completed when the sucking of the yarn Y by the sucking unit 36 is detected by the sucking sensor 36a. (The sucking sensor 36a functions as the determination information acquisition unit.)

The above-described determination as to whether the yarn threading has been completed may not be performed. In such a case, an operation unit for returning the yarn feeding speed of the roller from the yarn threading speed to the production speed is provided in each spindle, and the operator operates this operation unit after the completion of the yarn threading.

## Claims

1. A false-twist texturing machine (1) comprising spindles in each of which yarn supplying devices (11, 16) each being configured to supply a yarn (Y) and a false-twisting device (15) configured to twist the yarn (Y) are provided, wherein,
among the yarn supplying devices, two yarn supplying devices (11, 16) that neighbor each other in a yarn running direction and are arranged to oppose each other over the false-twisting device (15) are a first yarn supplying device (11) and a second yarn supplying device (16),
the false-twist texturing machine (1) further comprises: a motor (11a, 16a) which is provided for at least one of the first yarn supplying device (11) or the second yarn supplying device (16) in each of the spindles and is provided to drive the at least one of the yarn supplying devices (11, 16);
a rotation speed adjuster (11b, 16b) which is provided to correspond to each motor (11a, 16a) and is able to adjust rotation speed of the corresponding motor (11a, 16a);
a signal generator (23, 24) which is provided to correspond to each of the spindles and is able to generate a signal; and
a control unit (40) which is able to control the rotation speed adjuster (11b, 16b) provided in each of the spindles and is configured to individually control yarn feeding speed of the at least one of the yarn supplying devices (11, 16) of each of the spindles, and
upon receiving the signal generated by the signal generator (24), the control unit (40) controls the rotation speed adjuster (11b, 16b) of a target spindle that is a spindle where the received signal was generated, so as to set the yarn feeding speed of a target yarn supplying device that is the at least one of the yarn supplying devices (11b, 16b) of the target spindle at a yarn threading speed (i) which is different from a production speed at which the yarn (Y) is produced and (ii) which is a speed at which yarn threading is performed.

2. The false-twist texturing machine (1) according to claim 1, wherein,
the motor (11a, 16a) is provided for each of the first yarn supplying device (11) and the second yarn supplying device (16) in each of the spindles, and
the control unit (40) controls the rotation speed adjuster (11b, 16b) corresponding to the motor (11a, 16a) provided for each of the first yarn supplying device (11) and the second yarn supplying device (16) in the target spindle, so as to set both of the yarn feeding speed of the first yarn supplying device (11) and the yarn feeding speed of the second yarn supplying device (16) at the yarn threading speed.

3. The false-twist texturing machine (1) according to claim 1 or 2, wherein, the signal generator (23) is able to detect yarn breakage and is configured to generate the signal when detecting the yarn breakage.

4. The false-twist texturing machine (1) according to claim 2, wherein, the signal generator (24) is arranged to be operable by an operator, and is an operation unit configured to generate a signal in response to an operation.

5. The false-twist texturing machine (1) according to claim 4, wherein,
two operation units (24) are provided in each of the spindles, and
the control unit (40) sets the yarn feeding speed of the first yarn supplying device (11) at the yarn threading speed when one of the two operation units (24) is operated, and sets the yarn feeding speed of the second yarn supplying device (16) at the yarn threading speed when the other of the two operation units (24) is operated.

6. The false-twist texturing machine (1) according to claim 4, wherein,
one operation unit (24) is provided in each of the spindles, and
the control unit (40) sets both the yarn feeding speed of the first yarn supplying device (11) and the yarn feeding speed of the second yarn supplying device (16) at the yarn threading speed when the one operation unit (24) is operated.

7. The false-twist texturing machine (1) according to any one of claims 1 to 6, further comprising a determination information acquisition unit (22, 23, 24, 36a, 37) that is capable of obtaining information for determining whether yarn threading has been completed in each of the spindles, wherein,
for the target spindle, the control unit (40) determines whether the yarn threading has been completed based on a signal from the determination information acquisition unit (22, 23, 24, 36a, 37), and when determining that the yarn threading has been completed, the control unit (40) changes the yarn feeding speed of the yarn supplying device of the target spindle from the yarn threading speed to the production speed.

8. The false-twist texturing machine (1) according to claim 7, wherein,
the determination information acquisition unit (22) is capable of acquiring information regarding tension of the yarn, and
when the tension of the yarn acquired by the determination information acquisition unit (22) is equal to or larger than a predetermined value, the control unit (40) determines that the yarn threading has been completed.

9. The false-twist texturing machine (1) according to claim 7, wherein,
the determination information acquisition unit (22) is capable of acquiring information regarding tension of the yarn, and
when a predetermined time elapses after the tension of the yarn acquired by the determination information acquisition unit (22) becomes equal to or larger than a predetermined value, the control unit (40) determines that the yarn threading has been completed.

10. The false-twist texturing machine (1) according to claim 7, wherein,
the determination information acquisition unit (23) is able to detect whether there is a yarn in a yarn path downstream of the first yarn supplying device (11) and the second yarn supplying device (16) in the yarn running direction, and
when a predetermined time elapses after the determination information acquisition unit (23) detects that there is the yarn (Y) in the yarn path, the control unit (40) determines that the yarn threading has been completed.

11. The false-twist texturing machine (1) according to claim 7, wherein,
the determination information acquisition unit (23, 24) is the signal generator, and
when a predetermined time elapses after the signal generator (23, 24) generates the signal, the control unit (40) determines that the yarn threading has been completed.

12. The false-twist texturing machine (1) according to claim 7, further comprising a winding device (21) which is provided in each of the spindles and is configured to wind the yarn (Y) which has been twisted by the false-twisting device (15), wherein,
the winding device (21) includes a start instruction input unit which is arranged to be operable by the operator and by which an instruction to start winding of the yarn is able to be input,
the determination information acquisition unit (37) is the start instruction input unit, and
the control unit (40) determines that the yarn threading has been completed when the start instruction input unit (37) is operated.

13. The false-twist texturing machine (1) according to claim 7, further comprising a winding device (21) which is provided in each of the spindles and is configured to wind the yarn (Y) which has been twisted by the false-twisting device (15), wherein,
the winding device (21) includes:
a sucking unit (36) which is able to suck the yarn (Y) ; and
a sucking detection unit (36a) which is able to detect that the yarn (Y) is being sucked by the sucking unit (36),
the determination information acquisition unit (36a) is the sucking detection unit, and
when the sucking detection unit (36a) detects that the yarn (Y) is being sucked by the sucking unit (36), the control unit (40) determines that the yarn threading has been completed.

14. The false-twist texturing machine (1) according to any one of claims 1 to 13, wherein, the yarn threading speed is lower than the production speed.

15. The false-twist texturing machine (1) according to any one of claims 1 to 14, wherein, the yarn supplying device (11, 16) is a roller.
